Europäisches Patentamt

European Patent Office

Office européen des brevets

(19)

(11) Publication number: **0 307 120**
**A2**

# (12) EUROPEAN PATENT APPLICATION

(21) Application number: 88307954.3

(22) Date of filing: 26.08.88

(51) Int. Cl.4: **G06K 9/46 , G06K 9/68**

(30) Priority: 11.09.87 GB 8721425

(43) Date of publication of application:
15.03.89 Bulletin 89/11

(84) Designated Contracting States:
**DE FR IT NL SE**

(71) Applicant: **THE GENERAL ELECTRIC
COMPANY, p.l.c.
1 Stanhope Gate
London W1A 1EH(GB)**

(72) Inventor: **Murray, David William
24 Fidler Place
Bushey Herts. WD2 3UF(GB)**
Inventor: **Castelow, David Arthur
47 Friars Way
Bushey Herts. WD2 8BT(GB)**
Inventor: **Buxton, Bernard Francis
37 Rochester Road
London NW1 NJJ(GB)**

(74) Representative: **George, Sidney Arthur
The General Electric Company P.l.c. Central
Patent Department The Hirst Research
Centre East Lane
Wembley Middlesex, HA9 7PP(GB)**

(54) **Object recognition.**

(57) In a method and apparatus for the location and recognition of a simple (e.g. polyhedral) object (2), relative movement between the object and a video camera (1) is achieved by scanning of the camera or movement of the object. The object is surveyed by the camera, and pixels representing at least three successive images (3) generated by the camera are stored. The pixels are processed to locate edge-representing pixels (edgels). Visual motion vectors are computed at the edgels in the central one of the three images. The edgels are notionally linked into strings (18-36) representing edges of the object interconnected at vertices (12-17), to form a vertex-edge graph, which is subsequently segmented into topologically connected subgraphs. For each subgraph the distances of the vertices from the camera and their velocities relative to the camera are computed, and a partial wireframe of the object is derived from those distances. The partial wireframe is then compared with stored data relating to wireframe models to determine whether there is correspondence between the shape of the object and the shape represented by any of the models.

EP 0 307 120 A2

Fig.4.

Fig.1.

## Object Recognition

This invention relates to the location, recognition and computation of the motion of simple, for example polyhedral, objects moving relative to a video camera.

Much work has been done during the past decade with a view to devising systems which will locate simple objects, and will determine their 3-dimensional geometry, by scanning the scene using a video camera and by suitably processing the video signal thereby produced.

Such systems are particularly applicable to the field of robots, such as robots which are required to pick up specific objects and robot vehicles which are required to move around areas, such as warehouses or factory sites, without human guidance, taking fixtures or buildings of specific shapes as their reference.

It is an object of the present invention to provide a system which is capable of locating polyhedral objects and of recognising whether a located object has one of a number of preselected different shapes.

According to the invention, a method of locating an object and determining whether its shape is one of a number of preselected different shapes comprises surveying the object with a video camera while there is relative movement between the object and the camera; storing pixels representing at least three successive images generated by the camera; processing the pixels to locate pixels at which there are significant energy changes (edgels) corresponding to edges of the object; computing visual motion vectors at edgels in the central image of three images; notionally linking the edgels into strings representing edges of the object interconnected at vertices, to form a vertex-edge graph; segmenting the graph into topologically connected subgraphs; computing for each subgraph the distances of the vertices from the camera and their velocities relative to the camera; deriving from those distances a partial wireframe of the object; and comparing the partial wireframe with stored data relating to wireframe models to determine whether there is correspondence between the shape of the object and the shape represented by a model.

An embodiment of the invention will now be described, by way of example, with reference to the accompanying drawings, in which

Figure 1 is a block schematic diagram of object locating and recognising apparatus,

Figure 2 is a pictorial view of an example of a polyhedral object located and recognised by the apparatus of Figure 1,

Figure 3 is a schematic pictorial view illustrating major components of visual motion for the object,

Figures 4 and 5 show stages in the creation of an image vertex-edge graph,

Figures 6, 7 and 8 show stages in the segmentation of an edge map obtained from experimental results, and

Figure 9 shows various views of a computed 3D partial wireframe.

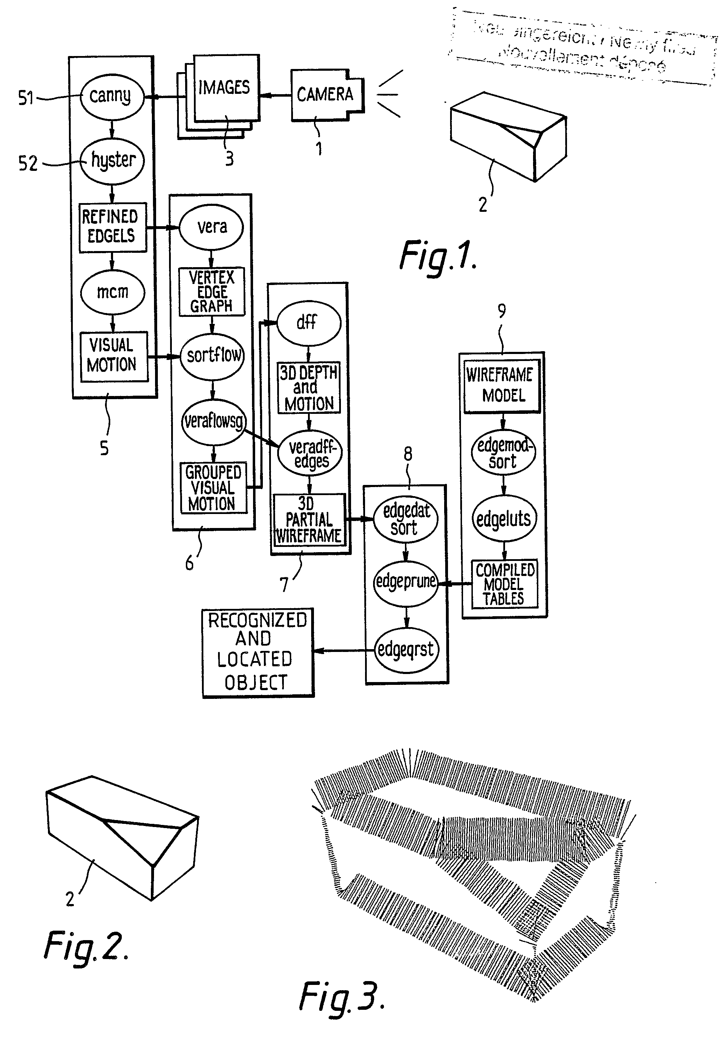

Referring to Figure 1, an object locating and recognising apparatus comprises a video camera which surveys the scene in which an object 2 is located. The camera is made to scan across the object, or the object moves, so that there is relative movement between the camera and the object. The camera produces video signals, which are fed to a digitiser and store 3 of a computer 4. A digital representation of at least three successive frames is stored as an array of intensity level values, i.e. pixels. The camera may be a charge-coupled device (CCD) camera with 512 x 512 pixels. The images are considered in batches of three, designated the back (b), central (c) and forward (f) images, respectively. These images are equally spaced in time, i.e. they are captured at times $t_c$, $t_b = t_c$-t, and $t_f = t_c$+t, where t is the constant time interval between images.

Image processing is effected as indicated by blocks 5, 6, 7, 8 and 9. In the block 5 low-level processing is carried out and the visual motion, i.e. the change in image intensity over time, is derived. In the block 6 image segmentation and visual motion segmentation are carried out. In the block 7 the 3-dimensional structure of the viewed object is derived from the 2-dimensional visual motion by a least squares technique, and in the block 8 matching of the derived structure with models is attempted. These operations are described in greater detail below.

Each stored image is firstly processed to locate significant intensity changes in it. For polyhedral objects, strong intensity changes will probably correspond to edges of the object. Edge pixels (edgels) are located, (step 51) and an edge map is derived by use of the Canny operator (see: Canny J.F. 1983 "Finding edges and lines in images" AITR No: 720, Artificial Intelligence Laboratory, MIT, Cambridge, MA, USA). Both the position and the orientation of local changes in intensity are computed. In a step 52, weak edgels, those at which the intensity change is small, are removed using thresholding with hysteresis, i.e. using a threshold window. This results in refining of the edgels.

2

The located edgels are used in two processes, which may be executed simultaneously. The first process is computing the visual motion in the central frame; the second process is computing a topological description of the intensity edgels.

The computation of the visual motion (or "optical flow") involves the intensity edgels, i.e. elements of intensity edge one pixel long, in the central frame which have been detected by the Canny operator. Each edgel is used as a matching token, and the computer searches uniformly in a region around that edgel in the next frame, computing a matching strength at each position where there is an edgel. By determining the principal axes and moments of the matching strength distribution, two orthogonal components of the optical flow are computed and each is given a "confidence value".

Around each edgel position in the central frame is constructed a notional circle of some radius which defines the extent of 'locales' in the forward and backward frames. A matching probability surface is notionally constructed within the extent of the locale around the edgel of the central frame by considering the likelihood that each edgel in the backward locale was the one from which the central edgel evolved over time, and the likehood that each edgel in the forward locale is the one to which the central edge evolves.

An optional step allows iterative refinement of this matching surface by introducing neighbourhood support. A neighbourhood is defined around the central edgel, with smaller radius than the locale. Suppose that the central edgel has a high probability of matching for a particular displacement. If an edgel in its neighbourhood in the central frame also has a high probability of matching with a similar displacement, this increases the probability of matching the central frame edgel with that displacement. However, if neighbours do not support matching with that displacement, the matching probability for the central frame edgel is reduced.

Hence, a matching probability distribution is computed within the locale extent for each edgel in the central frame. The two components and their confidences at each edgel are computed from its associated locale distribution using a principal axes decomposition.

As an example of a polyhedral object, the object 2 is shown in Figures 1 and 2 as a rectangular block with a corner removed. The major components of the optical flow for such object are shown in Figure 3. Such components lie nearly perpendicular to the direction of the relevant edge.

The topographical description of the edgels, i.e. the construction of a vertex-edge graph, is carried out as follows, using only the edgels in the central frame. The edgels so far detected are disconnected elements of light intensity change. It is necessary to link them into extended intensity edges, to classify them as being straight or curved and to derive their linkage in the image.

In order to link the edges, a strong edgel is taken as a starting point. The algorithm marks that edgel as having been visited and notionally travels along the edgel towards the left, where left is defined as if looking across the edge from the dark side to the light side. It looks for an adjacent edgel with a similar orientation. If one is found, the edgels are linked and the new edgel is marked as having been visited. The search continues in that direction, and the edgels are marked and linked to form a string, until no adjacent similarly orientated edgel is found. A break is then declared. The starting point edgel is then revisited, and a further search is carried out, now towards the right, until a break is encountered in that direction. The two breaks determine the ends of the string. Another unvisited edgel is then chosen and a new string is started. The process is repeated until all of the edgels have been visited.

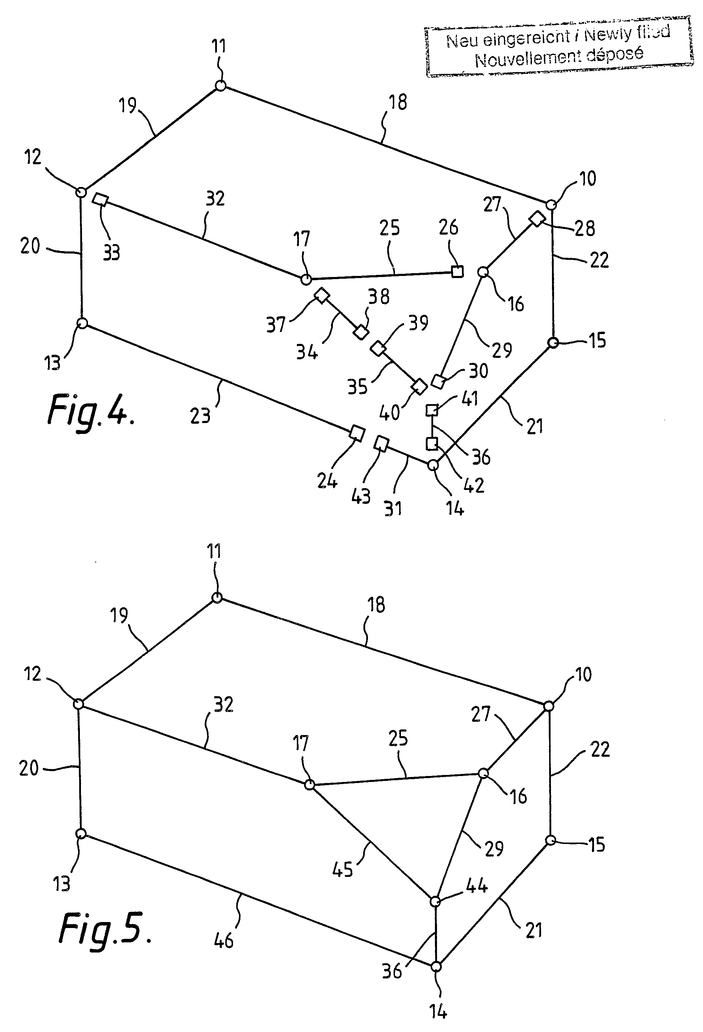

The local curvature along each string is then computed and compared with a threshold value. If at any point on a string the curvature exceeds that threshold, the point is taken to be a vertex of the object and a putative vertex is inserted at that point, and the string is thereby broken into edges entering the vertex. The vertex is "knitted" to those edges. The process is repeated for all of the strings and the edges and vertices thereby found construct a notional vertex-edge graph as shown in Figure 4.

The shape of each edge is determined, and those edges which are substantially straight are checked to see whether they end at a vertex or whether they are unattached. Points 10-17 in Figure 4 indicate vertices and each of the edges 18-22 terminate at two of those vertices. On the other hand, an edge 23 terminates at the vertex 13 but has a free end 24. Similarly, we have the following:-

| edge | terminates at vertex | has unattached end |
|------|------|------|
| 25 | 17· | 26 |
| 27 | 16 | 28 |
| 29 | 16 | 30 |
| 31 | 14 | 43 |
| 32 | 17 | 33 |

Edges 34, 35 and 36 are unattached at both ends 37 and 38, 39 and 40, 41 and 42, respectively.

If a straight edge has an unattached end, a search is made for a nearby vertex or other unattached end to which it can be linked, so that a linked graph structure of edges and vertices is created. Finally, the graph is refined by attempting to coalesce linked edges which are substantially colinear, and by improving the locations of the vertices. Very short unattached edge spurs are removed. The notional graph of Figure 5 is thereby obtained, in which a new vertex 44 has been inserted, the edges 23 and 31 have been joined to form an edge 46, the edges 34 and 35 have been joined to form an edge 45 which terminates at the vertices 17 and 44, and the edges 25,27,29 and 32 have been connected to the vertices 16,10,44 and 12, respectively. This graph structure extends throughout the central frame and conceptually links all edges and vertices.

The graph is then traversed and split into subgraphs of those edges which are knitted via vertices. Hence, each subgraph consists of vertices which knit to edges, and those edges are composed of edgels, at each of which the visual motion vector has been computed. The above image and visual motion segmentation is carried out as in the box 6 of Figure 1.

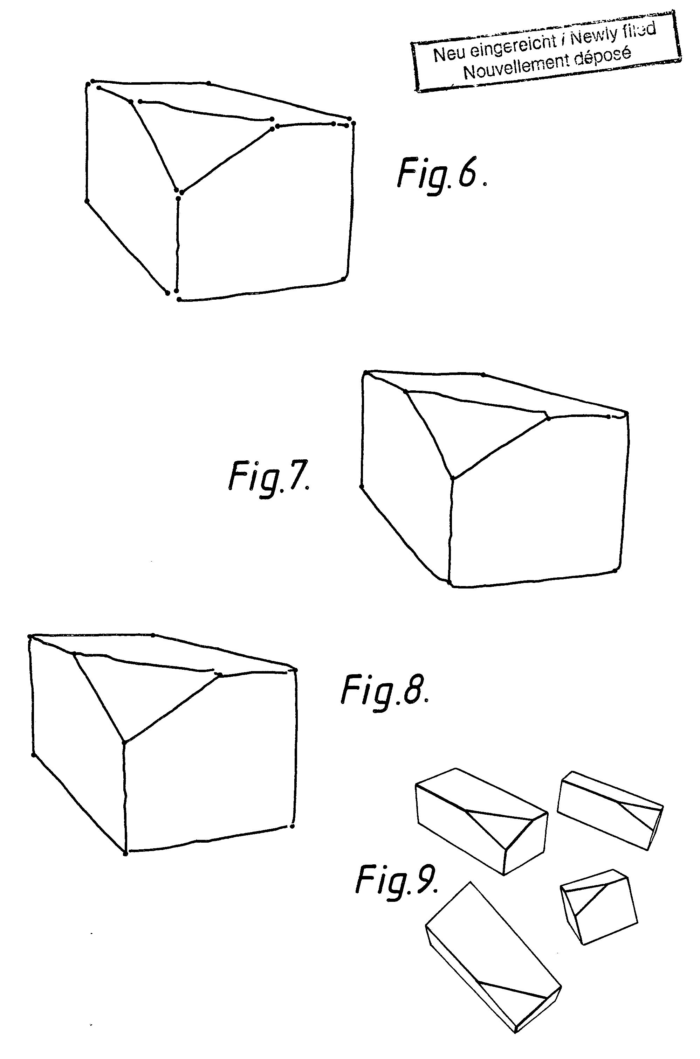

Figures 6, 7 and 8 show experimental results obtained at the various stages in the segmentation process. Figure 6 shows some strings attached to vertices and some unattached string ends. Figure 7 shows the previously unattached string ends now attached to vertices, but with distortion of the edges at some vertices. Figure 8 shows the improvements in the edge-map after recomputing of the vertex positions has been effected.

The 3-dimensional structure and motion are next computed as in the box 7.

Each subgraph of entities from the previous stage is taken to represent the 2D edge projection of a rigid polyhedron moving in the 3D scene in front of the camera. Each straight edge in the image subgraph is assumed to arise as the projection of a straight line in the 3D scene, and each vertex in the subgraph is assumed to arise from a vertex in the scene.

The distances of these 3D vertices from the camera and their rigid body motion (their translational and rotational velocities) comprise the unknowns which are to be recovered. If the values of the unknowns were available, one could predict precisely the values of the components of the visual motion one would see at each edgel on the 2D edges in a subgraph. However, these components are exactly what have been measured, and so one can perform a least squares procedure to compute the depths and motion of the 3D vertices. In other words, 3D depths and motion are derived for the scene vertices, such that some measure of the overall deviation between the observed and predicted values of the visual motion vector components is minimized.

In fact, while the rotational velocity is computed absolutely, the translation velocity and depths relative to the camera can be derived only up to a scale factor. This is a result of the inherent depth/speed scaling ambiguity in visual motion processing. The vision system cannot tell whether an object is large, far away and moving quickly, or small, near-to and moving slowly. This ambiguity is resolved during a location stage of recognition which is described below.

Knowledge of the depth of vertices and their interconnections enables the computation of 3D edges, which comprise a partial wireframe description of the observed relatively moving object. View of the computed 3D partial wireframe after some 200 iterations are shown in Figure 9. The object is recognized by obtaining a one-to-one match between the partial wireframe and one complete wireframe description from a database of such descriptions. This is effected according to box 8 of Figure 1.

A particular model from a table of the box 9 is invoked for test. A match is obtained by establishing a succession of facts, such as "if a data edge a is matched with a model edge X, then a data edge b can be matched to a model edge Y". A potential match is declared when these pairwise constraints are satisfied for all possible pairs of data edges and their corresponding model edges. The constraints are established on the basis of four viewpoint-independent metrics involving the orientation and relative disposition of the 3D edges of the data and model. On the model, the metrics comprise the angles between the pairs of edges X and Y, and the ranges of the three angles between (i) the edge X and the possible directions between any two points on the edges X and Y; (ii) the edge Y and the possible directions between any two points on the edges X and Y; and (iii) the angles between the unit vector in the direction of the vector product of the edges X and Y and the possible directions between any two points on the edges X and Y. The metrics on the data are similarly described.

Once a potential match is hypothesized, it is verified by computing the rotation, translation and scaling of the model from its database coordinate frame to the data coordinate frame as an average over all the data, then checking that each transformed model edge lies sufficiently near to the observed data edge. Only if this is satisfied is the match accepted and the object deemed to be recognized and located.

The scaling factor from the model to the data is necessary because of the depth/speed scaling ambiguity referred to above. The scale recovered from the location stage of recognition resolves this ambiguity, enabling absolute depths, and hence also the absolute translational velocity, to be recovered.

To increase efficiency during matching, the metrics on the model are computed once and once only "off-line". The values are held in several ExE matrices, where E is the number of edges on the wireframe model. This model compilation stage is effected according to box 9 of Figure 1.

It will be apparent that the method of the present invention can be used for other polyhedral objects. Such objects might be articles which are to be recognized and picked up by a robot. If the objects are stationary the camera must be scanned relative to the objects, but if the objects are moving, the camera may be stationary. On the other hand, the objects may be stationary, such as items of furniture or fixtures in a warehouse, or buildings on a factory site, around which a robot has to travel. The camera will then be carried by the robot, and the necessary relative movement will thereby be obtained. The system will then recognise the particular object or building at which some manoeuvre must be effected by the robot.

## Claims

1. A method of locating an object and determining whether its shape is one of a number of preselected different shapes, characterised by surveying the object (2) with a video camera (1) while there is relative movement between the object and the camera; storing pixels representing at least three successive images (3) generated by the camera; processing the pixels to locate pixels at which there are significant energy changes (edgels) corresponding to edges of the object; computing visual motion vectors (5) at edgels in the central image of three images; notionally linking the edgels into strings (6) representing edges of the object interconnected at vertices, to form a vertex-edge graph; segmenting the graph into topologically connected subgraphs; computing (7) for each subgraph the distances of the vertices from the camera and their velocities relative to the camera; deriving from those distances a partial wireframe of the object; and comparing (8) the partial wireframe with stored data (9) relating to wireframe models to determine whether there is correspondence between the shape of the object and the shape represented by a model.

2. A method as claimed in Claim 1, characterised in that the ends of a string of edgels are determined by starting with a first edgel; searching for an adjacent edgel with the same orientation; if one is found, linking said first and adjacent edgels; repeating the search and linking operation in the same direction until no further adjacent edgel with the same orientation is found; returning to the first edgel; and repeating the search and linking operation in the opposite direction for adjacent edgels with the same orientation as said first edgel.

3. A method as claimed in Claim 1 or Claim 2, characterised in that the curvature of a string of edgels is computed along said string and is compared with a threshold value; and in that a curvature in excess of the threshold value is taken as indicating a vertex of the object.

4. A method as claimed in Claim 3, characterised in that substantially straight strings are inspected to determine whether they end in vertices; and in that if a string with an unattached end is found a search is conducted to detect an adjacent vertex or other unattached end and if detected said adjacent vertex or other unattached end is joined to said first-mentioned unattached end.

5. Apparatus for locating an object and determining whether its shape is one of a number of preselected different shapes, characterised by a video camera (1) for surveying the object (2) while there is relative movement between the object and the camera; means to store data relating to pixels representing at least three successive images (3) generated by the camera; means (9) to store data relating to wireframe models; and computer means (5, 6, 7, 8) operative to carry out the steps of processing the pixels to locate pixels at which there are significant energy changes (edgels) corresponding to edges of the object; computing visual motion vectors at edgels in the central image of three images; notionally linking the edgels into strings representing edges of the object interconnected at vertices, to form a vertex-edge graph; segmenting the graph into topologically connected subgraphs; computing for each subgraph the distances of the vertices from the camera and their velocities relative to the camera; deriving from those distances a partial wireframe of the object; and comparing the partial wireframe with the stored data relating to wireframe models to determine whether there is correspondence between the shape of the object and the shape represented by a model.

Fig.1.

Fig.2.

Fig.3.

Fig.4.

Fig.5.

Fig.6.

Fig.7.

Fig.8.

Fig.9.